(19) Europäisches Patentamt
European Patent Office
Office européen des brevets

(11) EP 2 892 939 B1

(12) FASCICULE DE BREVET EUROPEEN

(45) Date de publication et mention de la délivrance du brevet:
**31.08.2016 Bulletin 2016/35**

(21) Numéro de dépôt: **13760026.8**

(22) Date de dépôt: **06.09.2013**

(51) Int Cl.:
***C08G 18/69*** *(2006.01)* ***C08G 18/78*** *(2006.01)*
***C08G 18/28*** *(2006.01)* ***H01B 3/30*** *(2006.01)*

(86) Numéro de dépôt international:
**PCT/EP2013/068493**

(87) Numéro de publication internationale:
**WO 2014/037514 (13.03.2014 Gazette 2014/11)**

# (54) COMPOSITION D'ALLOPHANATE ET DE RESINE HYDROPHOBE

ZUSAMMENSETZUNG AUS ALLOPHANAT UND HYDROPHOBEM HARZ

COMPOSITION OF ALLOPHANATE AND HYDROPHOBIC RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2012 FR 1258415**

(43) Date de publication de la demande:
**15.07.2015 Bulletin 2015/29**

(73) Titulaire: **Vencorex France**
**69800 Saint-Priest (FR)**

(72) Inventeur: **OLIER, Philippe**
**F-69007 Lyon (FR)**

(74) Mandataire: **Lavoix**
**62, rue de Bonnel**
**69448 Lyon Cedex 03 (FR)**

(56) Documents cités:
**EP-A1- 0 031 207** **EP-A2- 2 289 963**
**WO-A1-2010/067005** **US-A- 5 124 427**
**US-A- 5 688 860** **US-A1- 2011 263 797**

- **Solvay-Rhodia: "Rhodasurf LA 30", , mai 2010 (2010-05), XP002694558, Extrait de l'Internet: URL:http://www.rhodia.com/en/markets_and_products/product_finder/product_details_90002118_RHODASURF+LA+30.tcm [extrait le 2013-03-26]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 892 939 B1

## Description

L'invention concerne une composition de préparation de (poly)uréthane à partir d'un allophanate et d'une résine hydrophobe.
L'invention concerne également l'utilisation de cette composition en remplacement du poly-methylene-diphenyl-diisocyanate (pMDI), en particulier pour la préparation d'un matériau d'encapsulation de dispositif électrique.

On connait des allophanates destinés à des compositions de revêtement. WO-2010/067005 décrit un procédé de préparation d'allophanate ainsi qu'un allophanate et une composition comprenant l'allophanate et destinée à la préparation de compositions de revêtement en particulier de peinture.

Par ailleurs, on connait l'utilisation de (poly)isocyanates pour la préparation de compositions thermodurcissables pour la fabrication de matériaux, par exemple pour l'encapsulation de dispositifs électrique ou bien encore pour l'isolation. Généralement, ces systèmes ou compositions comprennent deux parties. Une première partie contient des composés hydroxylés, des charges, des additifs et un catalyseur. La seconde partie contient le polyisocyanate.
Lors de l'utilisation, les deux parties sont mélangées et le mélange est coulé dans un moule comprenant le dispositif à encapsuler.
L'utilisation de ces compositions réticulables doit avoir lieu assez rapidement après le mélange des deux parties de la composition. En effet, après un certain temps, la réticulation est trop avancée et rend la composition inutilisable.
Les différents éléments constituants la composition doivent être parfaitement compatibles afin de ne pas altérer les propriétés finales du matériau préparé, notamment les propriétés physiques du matériau. Parmi les paramètres qui doivent être contrôlés, la viscosité est particulièrement importante.
Par ailleurs, la présence d'eau peut conduire à des réactions parasites ou secondaires avec les groupements isocyanates et entraîne la formation de bulles ou de défauts dans le matériau final.

On connait l'utilisation du poly-methylene-diphenyl-diisocyanate (pMDI) pour la préparation de matériau, notamment pour l'encapsulation de dispositif électrique. EP-031207 décrit la préparation d'une composition liquide de diphénylméthane diisocyanate obtenue par réaction de cet isocyanate avec une quantité submolaire d'un monalkoxy polyalkylène glycol particulier dont la masse moléculaire est de 246g/mol. La réaction décrite conduit à des produits qui ne sont pas des allophanates. De plus, la résine mise en oeuvre n'est pas hydrophobe.

US-2011/0263797 décrit la préparation de mastic à partir de polymères issus d'un diphenylmethane diisocyanate à motifs allophanates et d'une résine de polyéther ou d'un polyol. Les résines utilisées ne sont pas hydrophobes.

US-5124427 divulgue un polyisocyanate utilisé dans une composition de revêtement. Ce polyisocyanate est notamment préparé à partir de HDI et d'éthylène glycol monomethylether ou de methoxy-2-propanol.

EP-2289963 concerne un mélange de polyisocyanate et de polyol pour la préparation de revêtements polyuréthanes. Ce mélange comprend des allophanates et un polymère d'hydroxy-styrène et de (meth)acrylate.

US-5688860 concerne des élastomères dérivés de polyisocyanates pour l'encapsulation de matériels électriques. Ces élastomères sont préparés à partir de polyuréthanes ou de polyurées. L'utilisation systématique d'une résine polyamine est indispensable.

Aucun de ces documents ne fournit de solutions satisfaisantes aux problèmes rencontrés par l'homme du métier. Ainsi, il existe un besoin d'autres solutions pour la préparation de compositions réticulables et en particulier de compositions réticulables utiles à la préparation de matériau d'encapsulation de dispositif électrique. En effet, ce produit peut contenir des quantités parfois importantes de methylene diphényl isocyanate (MDI) qui est classé H 351 dans le nouveau système GHS (suspecté de causer le cancer). Il est donc désormais admis que le pMDI peut présenter des risques lors de sa mise en oeuvre, notamment des risques sanitaires.
On connait également des compositions de préparation de (poly)uréthanes de viscosité élevée du fait de problèmes de miscibilité de leurs constituants. Une telle viscosité accrue conduit généralement au piégeage de bulles d'air qui peuvent conduire à des défauts dans le matériau final.

Des (poly)isocyanates connus présentent des problèmes de compatibilité avec des résines, notamment des résines hydrocarbonées à fonctions hydroxyles telles que par exemple le polybutadiène hydroxylé (HTBP). Ces problèmes de compatibilité conduisent en général à des phénomènes de réticulation incontrôlés.

Les compositions de préparation de (poly)uréthane doivent également être stables une fois préparées, notamment en évitant ou en contrôlant la réticulation de la résine mise en oeuvre avec le durcisseur. Une stabilité insuffisante peut conduire à une dérive de la viscosité du fait de phénomènes de réticulation incontrôlés.

La fluidité des compositions de préparation de (poly)uréthane est également une propriété importante, notamment lors de leur mise en oeuvre pour la préparation de résines de coulée.

L'hydrophobicité des matériaux préparés au moyen de compositions de préparation d'un (poly)uréthane est également une propriété importante.

Le compromis entre la capacité de réticulation des compositions de préparation d'un (poly)uréthane et la compatibilité entre la composante isocyanate et la résine mise en oeuvre est également un paramètre essentiel de ce type de compositions.

Ainsi, la présente invention fournit une composition de préparation d'un (poly)uréthane comprenant au moins un allophanate et au moins une résine qui peut être efficacement mise en oeuvre pour la préparation de matériau et notamment de matériau d'encapsulation de dispositif électrique. La composition selon l'invention est une composition thermodurcissable.

L'invention fournit également une alternative efficace à l'utilisation du pMDI.

L'invention permet donc d'apporter une solution à tout ou partie des problèmes liés aux compositions de préparation de (poly)uréthane de l'état de la technique.

La composition selon l'invention permet notamment de réduire, voire d'éliminer, les risques de réactions parasites ou secondaires lors de la réticulation en présence d'eau. La composition selon l'invention permet avantageusement la préparation de matériau, par exemple pour l'encapsulation de dispositif électrique, aux propriétés améliorées. L'invention fournit également une composition de préparation de (poly)uréthane dont la viscosité est particulièrement avantageuse.

La composition selon l'invention possède généralement une très bonne miscibilité avec d'autres composants habituellement utilisés lors de la préparation de compositions de préparation de (poly)uréthane, par exemple des additifs comme des résines ou des additifs porteurs de fonctions OH, des diols de faible poids moléculaire, des plastifiants, des catalyseurs.

La composition selon l'invention est de préférence essentiellement constituée d'une composante isocyanate et d'une résine hydrophobe, éventuellement d'additifs. Ainsi, la composition selon l'invention ne comprend que des quantités très faibles de solvants, par exemple moins de 10 %, voire moins de 5 % en masse, et, de préférence, elle ne comprend pas de solvant libre.

Au sein de la composition selon l'invention, l'allophanate mis en oeuvre possède une très bonne compatibilité et une très bonne miscibilité avec les résines hydrocarbonées, par exemple avec HTBP.

La composition selon l'invention permet avantageusement d'utiliser des substrats renouvelables.

Ainsi, l'invention fournit une composition de préparation d'un (poly)uréthane, dont la fonctionnalité moyenne est supérieure à 2, et comprenant

(a) une composante isocyanate de fonctionnalité NCO comprise entre 1,9 et 2,7 et comprenant au moins un allophanate

- de fonctionnalité NCO égale à 2 +/- 5% et
- de formule (I)

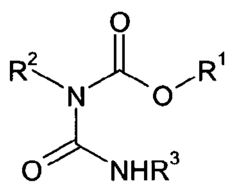

(I)

dans laquelle

- o $R^1$ représente le reste d'un composé monoalcool comprenant une fonction éther ou polyéther après réaction de l'hydrogène de la fonction OH avec un composé à fonction isocyanate ;
- ◦ $R^2$ et $R^3$, identiques ou différents, représentent un groupe hydrocarboné, comprenant une fonction isocyanate dérivée ou non-dérivée ;

(b) au moins une résine hydrophobe à fonctions hydroxyles

- de masse molaire supérieure à 500 g/mol ;
- de fonctionnalité OH égale à 2 ou supérieure à 2 ;
- de paramètres de solubilité de valeur inférieure à 20,4 $MPa^{1/2}$ et
- différente d'une polyamine choisie parmi les copolymères acrylonitrile/butadiène à fonctions amines terminales, et choisie parmi

  - o un poly-propylène, linéaire ou ramifié, à groupements hydroxyles ;
  - o un poly-propylène, linéaire ou ramifié, à groupements hydroxyles terminaux ;
  - o un poly-butadiène, linéaire ou ramifié, à groupements hydroxyles ;

o un poly-butadiène, linéaire ou ramifié, à groupements hydroxyles terminaux ;
o un polybutadiène hydroxylé, linéaire ou ramifié.

Selon la présente invention, une fonction isocyanate non-dérivée est une fonction isocyanate libre pour laquelle le groupement NCO est accessible. Une fonction isocyanate dérivée est une fonction pour laquelle le groupement NCO est lié à un autre groupement chimique.
Pour la composition selon l'invention, la fonctionnalité moyenne correspond au nombre total de fonctions

- isocyanates (NCO), dérivées ou non-dérivées et éventuellement masquées, présentes au sein de la composante isocyanate (a) et
- hyroxyles (OH) présentes au sein de la résine hydrophobe (b),

divisé par le nombre total de molécules porteuses de fonctions isocyanates au sein de la composante isocyanate (a) et de molécules porteuses de fonctions hyroxyles au sein de la résine hydrophobe (b).
Pour la composition selon l'invention, le ratio molaire défini par (nombre de fonctions NCO / nombre de fonctions OH) va de 0,9 à 3 ; de 1 à 3 ; de 0,9 à 1,5 ; de 1 à 1,5 ; de 0,9 à 1,2 ou de 1 à 1,2.
De manière avantageuse, la composition selon l'invention comprend une composante isocyanate (a) de fonctionnalité NCO choisie parmi une fonctionnalité NCO allant de 1,9 à 2,5 ; une fonctionnalité NCO allant de 1,9 à 2,3 ; une fonctionnalité NCO allant 1,9 à 2,2 ; une fonctionnalité NCO allant de 1,9 à 2,1 ; une fonctionnalité NCO allant de 2 à 2,5 ; une fonctionnalité NCO allant de 2 à 2,3 ; une fonctionnalité NCO allant 2 à 2,2.
De manière particulièrement avantageuse, la fonctionnalité NCO de la composition selon l'invention est donc égale ou proche de 2 et jusqu'à 2,7. Cette fonctionnalité NCO peut parfois varier autour de cette valeur de 2, notamment selon les conditions particulières de préparation de l'allophanate de formule (I).
De manière préférée, la composition selon l'invention comprend donc au moins un allophanate de formule (I) dont la fonctionnalité NCO va de 1,9 à 2,1 ou dont la fonctionnalité NCO va de 1,95 à 2,05.
Pour l'allophanate de formule (I) de la composition selon l'invention, $R^1$ représente le reste d'un composé monoalcool comprenant une fonction éther ou polyéther. De manière préférée, ce monoalcool comprend une fonction éther ou polyéther, avantageusement une fonction (poly)oxyde d'alkylène, de préférence (poly)oxyde d'éthylène, en particulier un monoéther de polyoxyde d'éthylène comportant avantageusement au plus 10 maillons en moyenne d'oxyde d'éthylène. Avantageusement, ce monoalcool comprend, en moyenne, moins de 5 maillons d'oxyde d'alkylène. De préférence, il comprend, en moyenne, 2 ou 3 maillons d'oxyde d'alkylène.
De manière avantageuse, le monoalcool est choisi parmi les alcools à chaîne aliphatique, notamment les alcools à chaîne cycloaliphatique et de préférence, les alcools à chaîne alkyle linéaire ou les alcools à chaîne alkyle faiblement ramifiée comprenant une seule fonction OH. Il peut s'agir d'un alcool hétérocyclique de type oxétane. Une chaîne alkyle est faiblement ramifiée si elle ne comprend pas d'atome de carbone tertiaire et neopentyliq ue.
De manière très avantageuse, le monoalcool est choisi parmi les alcools à chaîne aliphatique, linéaire ou faiblement ramifiée, et de longueur en $C_2$ ou supérieure ou de longueur en $C_5$ ou supérieure.
Les alcools appropriés peuvent également éventuellement comprendre une ou plusieurs doubles liaisons.
D'autres alcools particulièrement avantageux du point de vue de la faible viscosité sont les composés de formule (II)

$$T\text{-}[O\text{-}CH(L)\text{-}CH_2]_n\text{-}OH \qquad (II)$$

dans laquelle

- T représente un groupe $C_1$-$C_{20}$-alkyle linéaire ou un groupe $C_1$-$C_{20}$-alkyle ramifié, un groupe de formule Q-CO- dans laquelle Q représente un groupe $C_1$-$C_{20}$-alkyle linéaire ou un groupe $C_1$-$C_{20}$-alkyle ramifié ;
- n représente un nombre entier, avantageusement un nombre entier allant de 1 à 10, de préférence allant de 1 à 5 ;
- L représente H ou un groupe alkyle ou un groupe $C_1$-$C_8$-alkyle, notamment méthyle, ou un groupe polyéther, notamment un groupe de formule $-CH_2OG$ dans laquelle G représente une chaîne hydrocarbonée, notamment une chaîne polyoxyalkylène, de préférence une chaîne polyoxyéthylène.

Da manière préférée pour la composition selon l'invention, $R^1$ représente le reste d'un composé monoalcool choisi parmi les composés de formule (II).
Pour la composition selon l'invention, la chaîne aliphatique du résidu issu d'un monoalcool peut en outre être substituée ou interrompue par un groupe cycloalkyle ou par un groupe hétérocyclique.
On peut également utiliser des dérivés de type silanol comme composés apportant le groupe $R^1$ de l'allophanate de la composition selon l'invention.
Selon l'invention, l'allophanate est de préférence un allophanate de formule (I) dans laquelle $R^2$ et $R^3$, identiques

ou différents, représentent un groupe comprenant une fonction isocyanate dérivée ou non-dérivée et choisi parmi un groupe hydrocarboné aliphatique, cycloaliphatique, hétérocyclique ou aromatique, de préférence un groupe hydrocarboné aliphatique comprenant une fonction isocyanate dérivée ou non-dérivée, par exemple un groupe de formule $-(CH_2)_6-$.
Avantageusement, la fonction isocyanate peut être une fonction isocyanate dérivée qui est différente d'une fonction isocyanurate et qui est choisie parmi les fonctions carbamate, urée, biuret, uréthanne, uretinedione, acylurée, isocyanate masquée, allophanate.
Selon l'invention, l'allophanate peut être un homo-allophanate ou allophanate de formule (I) dans laquelle $R^2$ et $R^3$ sont identiques.
Selon l'invention, l'allophanate peut également être un allophanate mixte ou allophanate de formule (I) dans laquelle $R^2$ et $R^3$ sont différents.
Pour la composition selon l'invention, la composante isocyanate peut comprendre un mélange d'allophanates qui comprend au moins 25% en masse, avantageusement au moins 33% en masse, de préférence au moins 50% en masse d'au moins un monoallophanate.
La composition selon l'invention peut également comprendre un mélange d'allophanates comprenant au moins un allophanate choisi parmi un bis-allophanate, un tris-allophanate, un ou plusieurs allophanates lourds, ainsi que de manière minoritaire, du carbamate d'isocyanate $R^2NCO$ et d'alcool $R^1OH$ ou du carbamate d'isocyanate $R^3NCO$ et d'alcool $R^1OH$ ou du carbamate d'isocyanates $R^2NCO$ et $R^3NCO$ et d'alcool $R^1OH$.

Selon l'invention, la résine hydrophobe de la composition selon l'invention n'est pas une polyamine choisie parmi les copolymères acrylonitrile/butadiène à fonctions amines terminales.
De manière avantageuse, la composition selon l'invention comprend une résine hydrophobe de fonctionnalité OH allant de 2 à 25 ; de fonctionnalité OH allant de 2 et 15 ; de fonctionnalité OH allant de 2 à 10 ; de fonctionnalité OH allant de 2 à 5 ; de fonctionnalité OH allant de 2,1 à 25 ; de fonctionnalité OH allant de 2,1 et 15 ; de fonctionnalité OH allant de 2,1 à 10 ; de fonctionnalité OH allant de 2,1 à 5.

La masse molaire de la résine hydrophobe de la composition selon l'invention est supérieure à 500 g/mol. De préférence, la résine hydrophobe est une résine hydrophobe dont la masse molaire est supérieure à 1 000 g/mol.
Cette masse molaire peut notamment aller de 1000 à 20 000 g/mol, de préférence de 1000 à 10 000 g/mol.

De manière préférée, la résine hydrophobe est une résine dont les paramètres de solubilité ont une valeur inférieure à 18,4 $MPa^{1/2}$ ou inférieure à 16,4 $MPa^{1/2}$ ou comprise entre 16,4 et 18,4 $MPa^{1/2}$.

Selon l'invention, la résine hydrophone comprend plusieurs fonctions hydroxyles. Ces fonctions hydroxyles peuvent être présentes au sein de la structure chimique de la résine ou bien être en positions terminales.

Comme résine hydrophobe selon l'invention, le polybutadiène hydroxytéléchélique (PBHT) linéaire ou ramifié est préféré, en particulier le polybutadiène hydroxytéléchélique linéaire.

La composition selon l'invention comprend une composante isocyanate (a) principalement à base d'au moins un allophanate de fonctionnalité NCO égale à 2 +/- 5% et de formule (I). Cette composante isocyanate peut également comprendre un ou plusieurs autres allophanates mais également un ou plusieurs autres (poly)isocyanates, par exemple au moins un isocyanate polyfonctionnel tricondensat (c).
Par ailleurs, la composition selon l'invention peut comprendre au moins un additif de type polyol et différent de la résine (b).
La composition selon l'invention peut également comprendre simultanément au moins un isocyanate polyfonctionnel tricondensat (c) et au moins un additif de type polyol et différent de la résine (b).

Selon l'invention, l'isocyanate polyfonctionnel tricondensat (c) est de préférence choisi parmi les composés de formule (III) :

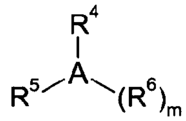

(III)

dans laquelle

- $R^4$, $R^5$ et $R^6$ représentent indépendamment un groupement hydrocarboné ou hétérocarboné aliphatique, cycloaliphatique, hétérocyclique ou aromatique, comprenant une fonction isocyanate dérivée ou non-dérivée ;
- m représente 0, 1 ou 2 ;
- A représente un groupement choisi parmi un groupe isocyanurate, un groupe imino oxadiazine dione, un groupe oxadiazine trione, un groupe biuret respectivement de formules (A1) à (A4)

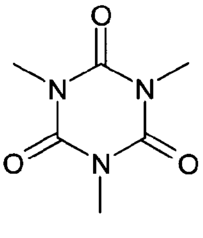

(A1)

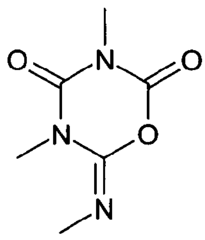

(A2)

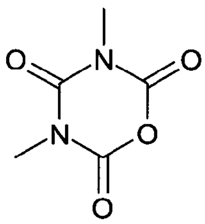

(A3)

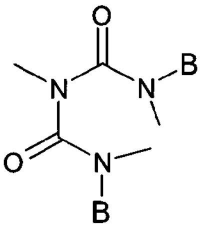

(A4)

dans laquelle B représente indépendamment un atome d'hydrogène ; un groupe hydrocarboné ; un groupe hydrocarboné en $C_1$-$C_{20}$ ; un groupe hétérocarboné comprenant au moins un hétéroatome choisi parmi O, N, S, Si ; un groupe hétérocarboné en $C_1$-$C_{20}$ comprenant au moins un hétéroatome choisi parmi O, N, S, Si ; un groupement de formule (B1)

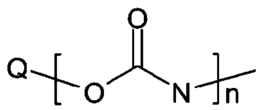

(B1)

dans laquelle n représente 3 ou 4 et Q représente un groupement choisi parmi un groupe hydrocarboné, un groupement alcoyle, un groupement hydrocarboné, un groupement hétérocarboné aliphatique, cycloaliphatique, hétérocyclique ou aromatique, comprenant une fonction isocyanate dérivée ou non-dérivée.
De manière préférée selon l'invention, l'isocyanate polyfonctionnel tricondensat (c) est un polyisocyanate isocyanurate vrai.
La composante isocyanate (a) de la composition selon l'invention peut comprendre au moins un isocyanate polyfonctionnel tricondensat (c) selon les caractéristiques :

(i) le rapport pondéral entre l'allophanate de la composante isocyanate (a) et l'isocyanate polyfonctionnel tricondensat (c) va de 60/40 à 90/10, de 30/70 à 90/10, de 60/40 à 80/20, de 30/70 à 80/20, de 60/40 à 85/15, de 30/70 à 85/15 ;
(ii) l'isocyanate polyfonctionnel tricondensat (c) est issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% ;
(iii) l'isocyanate polyfonctionnel tricondensat (c) comprend entre 1 et 99% en poids de biuret ou entre 2 et 75% en poids de biuret ; les combinaisons (i) et (ii), (i) et (iii), (ii) et (iii) ou (i), (ii) et (iii).

La composition et la composante isocyanate (a) selon l'invention présentent des propriétés améliorées par rapport aux compositions ou isocyanates de l'état de la technique. Ces propriétés peuvent être mises en oeuvre dans de nombreux domaines techniques ainsi que dans le cade d'utilisations variées.
Ainsi, l'invention concerne également, l'utilisation d'une composante isocyanate (a) ou d'un allophanate selon l'invention comme durcisseur d'une résine hydrophobe, en particulier d'une résine hydrophobe selon l'invention.
L'utilisation préférée selon l'invention est mise en oeuvre lors de la préparation de polyuréthane ou d'un matériau polyuréthane.
L'invention concerne donc également l'utilisation d'une composition selon l'invention pour la préparation d'un (poly)uréthane, notamment pour la préparation d'un matériau
(poly)uréthane pour l'encapsulation ou encore pour la préparation d'un matériau (poly)uréthane pour l'encapsulation d'un dispositif électrique.
L'invention concerne également un dispositif électrique encapsulé au moyen d'un (poly)uréthane préparé à partir d'une composition selon l'invention.
Par ailleurs, l'invention concerne également l'utilisation d'une composante isocyanate (a) ou d'un allophanate selon l'invention pour le remplacement du poly-methylene-diphenyl-diisocyanate (pMDI) dans la préparation d'un (poly)uréthane à partir d'une résine hydrophobe selon l'invention. Une telle utilisation est particulièrement utile pour pour la préparation d'un (poly)uréthane comme matériau d'encapsulation ou comme matériau d'encapsulation électrique.
Les différents aspects et les propriétés avantageuses de l'invention peuvent être illustrés par les exemples qui suivent. Ces exemples ne constituent pas de limitation de la portée de cette invention.

Exemple 1

Matériels

Le polyisocyanate P1 a été préparé selon la méthode décrite dans WO-2010/067005 à partir de Rhodasurf LA30 (Rhodia) et d'hexaméthylènediisocyanate. Les caractéristiques principales de ce produit sont :

- fonctionnalité NCO : 12,6%,
- viscosité dynamique (à 25°C) : 130 mPa.s,
- densité : 1,13.

Le polyisocyanate P2 selon l'invention est un mélange (60/40 v/v) de polyisocyanate P1 avec du Tolonate HDT (Perstorp) qui est un polyisocyanate préparé à partir d'hexaméthylènediisocyanate. Les caractéristiques principales de ce produit sont :

- fonctionnalité NCO : 16,5%,
- viscosité dynamique (à 25°C) : 363 mPa.s,
- densité : 1,13.

PolyBD 45R HTO (Cray Valley) est un polybutadiène à hydroxyls terminaux (HTPB) de formule :

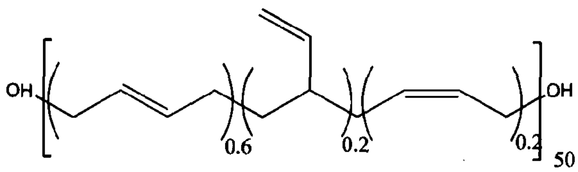

Les caractéristiques principales de ce produit sont :

- fonctionnalité OH : 1,39%,
- viscosité dynamique (à 25°C) : 6 665 mPa.s,
- densité : 0,9.

Tolonate HDT-LV2 (Perstorp) est un polyisocyanate préparé à partir d'hexaméthylènediisocyanate. Les caractéristiques principales de ce produit sont :

- fonctionnalité NCO : 23%,
- viscosité dynamique (à 25°C) : 600 mPa.s,
- densité : 1,13.

Desmodur VL (Bayer) est un polyisocyanate préparé à partir d'un polymère de methylènediphenyldiisocyanate. Les caractéristiques principales de ce produit sont :

- fonctionnalité NCO : 31,5%,
- viscosité dynamique (à 25°C) : 91 mPa.s,
- densité : 1,24.

Résultats

La viscosité d'un mélange d'au moins deux liquides peut être calculée grâce à l'équation de Refutas, en considérant que la miscibilité de deux composantes est complète.
Selon que les résultats expérimentaux obtenus sont cohérents avec les données calculées, on déterminera la miscibilité des composantes du mélange.

La première étape consiste à calculer l'index de viscosité (viscosity blending index - VBI) pour chaque composante du mélange :

$$\mathrm{VBN} = 14.534 \times \ln\left[\ln(v + 0.8)\right] + 10.975$$

dans laquelle v représente la viscosité en centistokes.

L'étape suivante consiste à calculer l'index de viscosité du mélange (viscosity blending index - VBI-blend) :

$$\mathrm{VBN_{Blend}} = [x_A \times \mathrm{VBN}_A] + [x_B \times \mathrm{VBN}_B] + \cdots + [x_N \times \mathrm{VBN}_N]$$

Enfin, la viscosité du mélange est obtenue grâce à l'équation :

$$v = \exp\left(\exp\left(\frac{\mathrm{VBN_{Blend}} - 10.975}{14.534}\right)\right) - 0.8,$$

HTPB et polyiscyanates sont mélangées à différents ratios au moyen d'une spatule, en particulier en des ratios pour lesquel HTPB est majoritaire et représente au moins 50% du mélange, voire entre 70 et 90% du mélange.
La viscosité dynamique (à 25°C) est mesurée puis convertie en une valeur de viscosité cinématique à partir des densités respectives des produits et des mélanges.

Enfin, les comparaisons sont effectuées.

Exemple comparatif 1.1 : mélange HTPB et Tolonate HDT-LV2

| Quantité de HTPB (% en masse) | Viscosité calculée du mélange ($mm^2.s^{-1}$) | Viscosité mesurée du mélange ($mm^2.s^{-1}$) |
|---|---|---|
| 100 | 7405 | 7405 |
| 90 | 5448 | 6595 |
| 80 | 4050 | 6286 |
| 70 | 3042 | 6035 |
| 60 | 2307 | 5540 |
| 50 | 1767 | 2151 |
| 30 | 1064 | 1338 |

Exemple 1.2 : mélange HTPB et polyisocyanate P1

| Quantité de HTPB (% en masse) | Viscosité calculée du mélange ($mm^2.s^{-1}$) | Viscosité mesurée du mélange ($mm^2.s^{-1}$) |
|---|---|---|
| 100 | 7405 | 7405 |
| 90 | 4300 | 5247 |
| 80 | 2582 | 4159 |
| 70 | 1600 | 3013 |
| 60 | 1020 | 2434 |
| 50 | 668 | 1684 |
| 30 | 309 | 752 |

Exemple 1.3 : mélange HTPB et polyisocyanate P2

| Quantité de HTPB (% en masse) | Viscosité calculée du mélange ($mm^2.s^{-1}$) | Viscosité mesurée du mélange ($mm^2.s^{-1}$) |
|---|---|---|
| 100 | 7405 | 7405 |
| 90 | 5070 | 5862 |
| 80 | 3529 | 4864 |
| 70 | 2495 | 4261 |
| 60 | 1790 | 3208 |
| 50 | 1302 | 2337 |
| 30 | 717 | 1104 |
| comparatif | | |

Exemple 1.4 : mélange HTPB et Desmodur VL

| Quantité de HTPB (% en masse) | Viscosité calculée du mélange ($mm^2.s^{-1}$) | Viscosité mesurée du mélange ($mm^2.s^{-1}$) |
|---|---|---|
| 100 | 7405 | 7405 |
| 90 | 3953 | 5874 |
| 80 | 2207 | 4875 |
| 70 | 1283 | 3990 |
| 60 | 775 | 3285 |
| 50 | 485 | 1578 |
| 30 | 209 | 543 |

Les viscosités mesurées pour les mélanges HTPB avec les polyisocyanates P1 et P2 sont les plus proches des viscosités calculées. On constate donc une meilleure compatibilité entre HTPB et ces polyisocyanates P1 et P2 qu'avec les autres polyisocyanates.

En particulier, pour un ratio constant des fonctionnalités NCO/fonctionnalités OH (NCO/OH = 1,03), les mélanges à base de polyisocyanates P1 et P2 présentent des viscosités plus faibles que les mélanges à base de Desmodur VL ou de Tolonate HDT-LV2 alors que la viscosité du Desmodur VL est moindre que celles des polyisocyanates P1 et P2.

| | Tolonate HDT-LV2 | Desmodur VL | Polyisocyanates P1 - P2 |
|---|---|---|---|
| HTPB (%) | 14 | 11 | 23-19 |
| Polyisocyanate (%) | 86 | 89 | 77-81 |
| Viscosité ($mm^2.s^{-1}$) | 6140 | 5870 | 4129-4810 |

**Revendications**

**1.** Composition de préparation d'un (poly)uréthane, dont la fonctionnalité moyenne est supérieure à 2, comprenant

(a) une composante isocyanate de fonctionnalité NCO comprise entre 1,9 et 2,7 et comprenant au moins un allophanate

- de fonctionnalité NCO égale à 2 +/- 5% et
- de formule (I)

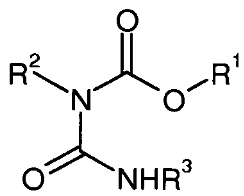

(I)

dans laquelle

o $R^1$ représente le reste d'un composé monoalcool comprenant une fonction éther ou polyéther après réaction de l'hydrogène de la fonction OH avec un composé à fonction isocyanate ;
◦ $R^2$ et $R^3$, identiques ou différents, représentent un groupe hydrocarboné, comprenant une fonction isocyanate dérivée ou non-dérivée ;

(b) au moins une résine hydrophobe à fonctions hydroxyles

• de masse molaire supérieure à 500 g/mol ;
• de fonctionnalité OH égale à 2 ou supérieure à 2 ;
• de paramètres de solubilité de valeur inférieure à 20,4 $MPa^{1/2}$ ;
• différente d'une polyamine choisie parmi les copolymères acrylonitrile/butadiène à fonctions amines terminales, et choisie parmi

o un poly-propylène, linéaire ou ramifié, à groupements hydroxyles ;
o un poly-propylène, linéaire ou ramifié, à groupements hydroxyles terminaux ;
o un poly-butadiène, linéaire ou ramifié, à groupements hydroxyles ;
o un poly-butadiène, linéaire ou ramifié, à groupements hydroxyles terminaux ;
o un polybutadiène hydroxylé, linéaire ou ramifié.

**2.** Composition selon la revendication 1 dont le ratio molaire défini par (nombre de fonctions NCO / nombre de fonctions OH) va de 0,9 à 3 ; de 1 à 3 ; de 0,9 à 1,5 ; de 1 à 1,5 ; de 0,9 à 1,2 ou de 1 à 1,2.

**3.** Composition selon les revendications 1 ou 2 comprenant une composante isocyanate (a) de fonctionnalité NCO choisie parmi une fonctionnalité NCO allant de 1,9 à 2,5 ; une fonctionnalité NCO allant de 1,9 à 2,3 ; une fonctionnalité NCO allant 1,9 à 2,2 ; une fonctionnalité NCO allant de 1,9 à 2,1 ; une fonctionnalité NCO allant de 2 à 2,5 ; une fonctionnalité NCO allant de 2 à 2,3 ; une fonctionnalité NCO allant 2 à 2,2.

**4.** Composition selon les revendications 1 à 3 comprenant au moins un allophanate de fonctionnalité NCO allant de 1,9 à 2,1 ou de fonctionnalité NCO allant de 1,95 à 2,05.

**5.** Composition selon les revendications 1 à 4 pour laquelle

• $R^1$ représente le reste d'un composé monoalcool choisi parmi les composés de formule (II)

$$T\text{-}[O\text{-}CH(L)\text{-}CH_2]_n\text{-}OH \qquad (II)$$

dans laquelle

o T représente un groupe $C_1$-$C_{20}$-alkyle linéaire ou un groupe $C_1$-$C_{20}$-alkyle ramifié, un groupe de formule Q-CO- dans laquelle Q représente un groupe $C_1$-$C_{20}$-alkyle linéaire ou un groupe $C_1$-$C_{20}$-alkyle ramifié ;
o n représente un nombre entier, avantageusement un nombre entier allant de 1 à 10, de préférence allant de 1 à 5 ;
o L représente H ou un groupe alkyle ou un groupe $C_1$-$C_8$-alkyle, notamment méthyle, ou un groupe polyéther, notamment un groupe de formule - $CH_2OG$ dans laquelle G représente une chaîne hydrocarbonée, notamment une chaîne polyoxyalkylène, de préférence une chaîne polyoxyéthylène ; ou

• $R^2$ et $R^3$, identiques ou différents, représentent un groupe comprenant une fonction isocyanate dérivée ou non-dérivée et choisi parmi un groupe hydrocarboné aliphatique, cycloaliphatique, hétérocyclique ou aromatique, de préférence un groupe hydrocarboné aliphatique comprenant une fonction isocyanate dérivée ou non-dérivée ; ou

• $R^1$ représente le reste d'un composé monoalcool choisi parmi les composés de formule (II)

$$T\text{-}[O\text{-}CH(L)\text{-}CH_2]_n\text{-}OH \qquad (II)$$

dans laquelle

o T représente un groupe $C_1$-$C_{20}$-alkyle linéaire ou un groupe $C_1$-$C_{20}$-alkyle ramifié, un groupe de formule Q-CO- dans laquelle Q représente un groupe $C_1$-$C_{20}$-alkyle linéaire ou un groupe $C_1$-$C_{20}$-alkyle ramifié ;
o n représente un nombre entier, avantageusement un nombre entier allant de 1 à 10, de préférence allant de 1 à 5 ;
o L représente H ou un groupe alkyle ou un groupe $C_1$-$C_8$-alkyle, notamment méthyle, ou un groupe polyéther, notamment un groupe de formule - $CH_2OG$ dans laquelle G représente une chaîne hydrocarbonée, notamment une chaîne polyoxyalkylène, de préférence une chaîne polyoxyéthylène ; et

• $R^2$ et $R^3$, identiques ou différents, représentent un groupe comprenant une fonction isocyanate dérivée ou non-dérivée et choisi parmi un groupe hydrocarboné aliphatique, cycloaliphatique, hétérocyclique ou aromatique, de préférence un groupe hydrocarboné aliphatique comprenant une fonction isocyanate dérivée ou non-dérivée.

**6.** Composition selon les revendications 1 à 5 pour laquelle l'allophanate est un homo-allophanate, $R^2$ et $R^3$ étant identiques, ou pour laquelle l'allophanate est un allophanate mixte, $R^2$ et $R^3$ étant différents.

**7.** Composition selon les revendications 1 à 6

• comprenant un mélange d'allophanates comprenant au moins 25% en masse, avantageusement au moins 33% en masse, de préférence au moins 50% en masse d'au moins un monoallophanate ; ou

• comprenant un mélange d'allophanates comprenant au moins un allophanate choisi parmi un bis-allophanate, un tris-allophanate, un ou plusieurs allophanates lourds, ainsi que de manière minoritaire, du carbamate d'isocyanate $R^2NCO$ et d'alcool $R^1OH$ ou du carbamate d'isocyanate $R^3NCO$ et d'alcool $R^1OH$ ou du carbamate d'isocyanates $R^2NCO$ et $R^3NCO$ et d'alcool $R^1OH$.

**8.** Composition selon les revendications 1 à 7

• comprenant une résine hydrophobe de fonctionnalité OH allant de 2 à 25 ; de fonctionnalité OH allant de 2 et 15 ; de fonctionnalité OH allant de 2 à 10 ; de fonctionnalité OH allant de 2 à 5 ; de fonctionnalité OH allant de 2,1 à 25 ; de fonctionnalité OH allant de 2,1 et 15 ; de fonctionnalité OH allant de 2,1 à 10 ; de fonctionnalité OH allant de 2,1 à 5 ; ou

• comprenant une résine hydrophobe dont la masse moléculaire est supérieure à 1 000 g/mol ou comprenant une résine hydrophobe dont les paramètres de solubilité ont une valeur inférieure à 18,4 $MPa^{1/2}$ ou inférieure à 16,4 $MPa^{1/2}$ ou comprise entre 16,4 et 18,4 $MPa^{1/2}$.

**9.** Composition selon les revendications 1 à 8 comprenant également au moins un isocyanate polyfonctionnel tricondensat (c) ou au moins un additif de type polyol et différent de la résine (b) ou simultanément au moins un isocyanate polyfonctionnel tricondensat (c) et au moins un additif de type polyol et différent de la résine (b).

**10.** Composition selon les revendications 1 à 9 comprenant également au moins un isocyanate polyfonctionnel tricondensat (c) choisi parmi les composés de formule (III) :

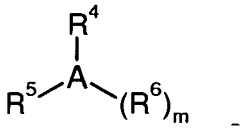

(III)

dans laquelle

- $R^4$, $R^5$ et $R^6$ représentent indépendamment un groupement hydrocarboné ou hétérocarboné aliphatique, cycloaliphatique, hétérocyclique ou aromatique, comprenant une fonction isocyanate dérivée ou non-dérivée ;
- m représente 0, 1 ou 2 ;
- A représente un groupement choisi parmi un groupe isocyanurate, un groupe imino oxadiazine dione, un groupe oxadiazine trione, un groupe biuret respectivement de formules (A1) à (A4)

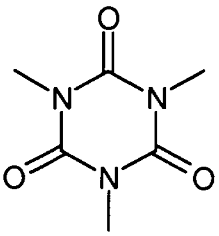

(A1)

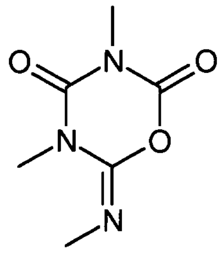

(A2)

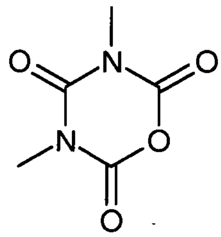

(A3)

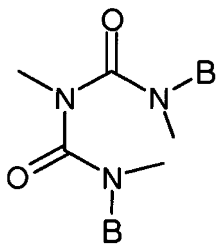

(A4)

dans laquelle B représente indépendamment un atome d'hydrogène ; un groupe hydrocarboné ; un groupe hydrocarboné en $C_1$-$C_{20}$ ; un groupe hétérocarboné comprenant au moins un hétéroatome choisi parmi O, N, S, Si ; un groupe hétérocarboné en $C_1$-$C_{20}$ comprenant au moins un hétéroatome choisi parmi O, N, S, Si ; un groupement de formule (B1)

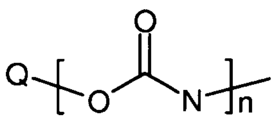

(B1)

dans laquelle n représente 3 ou 4 et Q représente un groupement choisi parmi un groupe hydrocarboné, un groupement alcoyle, un groupement hydrocarboné, un groupement hétérocarboné aliphatique, cycloaliphatique, hétérocyclique ou aromatique, comprenant une fonction isocyanate dérivée ou non-dérivée.

**11.** Composition selon les revendications 1 à 10 comprenant également au moins un isocyanate polyfonctionnel tricondensat (c) qui est un polyisocyanate isocyanurate vrai ou comprenant également au moins un isocyanate polyfonctionnel tricondensat (c) selon les caractéristiques :

(i) le rapport pondéral entre l'allophanate de la composante isocyanate (a) et l'isocyanate polyfonctionnel tricondensat (c) va de 60/40 à 90/10, de 30/70 à 90/10, de 60/40 à 80/20, de 30/70 à 80/20, de 60/40 à 85/15, de 30/70 à 85/15 ;
(ii) l'isocyanate polyfonctionnel tricondensat (c) est issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% ;
(iii) l'isocyanate polyfonctionnel tricondensat (c) comprend entre 1 et 99% en poids de biuret ou entre 2 et 75% en poids de biuret ;

les combinaisons (i) et (ii), (i) et (iii), (ii) et (iii) ou (i), (ii) et (iii).

**12.** Utilisation d'une composante isocyanate (a) ou d'un allophanate définis selon les revendications 1 ou 3 à 7 comme durcisseur d'une résine hydrophobe définie selon les revendications 1 ou 8.

**13.** Utilisation d'une composition selon les revendications 1 à 12 pour la préparation d'un (poly)uréthane, pour la préparation d'un matériau (poly)uréthane pour l'encapsulation ou pour la préparation d'un matériau (poly)uréthane pour l'encapsulation d'un dispositif électrique.

**14.** Dispositif électrique encapsulé au moyen d'un (poly)uréthane préparé à partir d'une composition selon les revendications 1 à 13.

**15.** Utilisation d'une composante isocyanate (a) ou d'un allophanate définis selon les revendications 1 ou 3 à 7 en remplacement du poly-methylene-diphenyl-diisocyanate (pMDI) dans la préparation d'un (poly)uréthane à partir d'une résine hydrophobe selon les revendications 1 ou 8 ou pour la préparation d'un (poly)uréthane comme matériau d'encapsulation ou comme matériau d'encapsulation électrique.

**Patentansprüche**

**1.** Zusammensetzung zur Herstellung eines (Poly)urethans, dessen durchschnittliche Funktionalität größer als 2 ist, umfassend

(a) eine Isocyanat-Komponente der Funktionalität NCO zwischen 1,9 und 2,7 und umfassend mindestens ein Allophanat

• der Funktionalität NCO gleich 2 +/- 5% und
• der Formel (I)

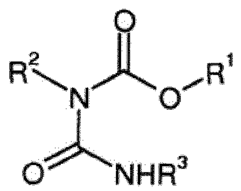

(I)

wobei

o $R^1$ den Rest einer Monoalkohol-Verbindung umfassend eine Ether- oder Polyether-Funktion nach Reaktion des Wasserstoffs der OH-Funktion mit einer Verbindung der Isocyanat-Funktion darstellt;
o $R^2$ und $R^3$, gleich oder verschieden, eine Kohlenwasserstoffgruppe darstellen, umfassend eine derivatisierte oder nicht-derivatisierte Isocyanat-Funktion;

(b) mindestens ein hydrophobes Harz mit Hydroxyl-Funktionen

• der molaren Masse größer als 500 g/mol;
• der Funktionalität OH gleich 2 oder größer als 2;
• der Löslichkeitsparameter mit Wert kleiner als 20,4 $MPa^{1/2}$;
• verschieden von einem Polyamin ausgewählt aus den Copolymeren Acrylonitril/Butadien mit terminalen Amin-Funktionen und ausgewählt aus

o einem linearen oder verzweigten Polypropylen mit Hydroxylgruppen;
o einem linearen oder verzweigten Polypropylen mit terminalen Hydroxylgruppen;
o einem linearen oder verzweigten Polybutadien mit terminalen Hydroxylgruppen;
o einem hydroxylierten, linearen oder verzweigten Polybutadien.

**2.** Zusammensetzung gemäß Anspruch 1, deren molares Verhältnis definiert durch (Anzahl der NCO-Funktionen / Anzahl der OH-Funktionen) von 0,9 bis 3; von 1 bis 3, von 0,9 bis 1,5; von 1 bis 1,5; von 0,9 bis 1,2 oder von 1 bis 1,2 geht.

**3.** Zusammensetzung gemäß den Ansprüche 1 oder 2 umfassend eine Isocyanat-Komponente (a) der Funktionalität NCO ausgewählt aus einer Funktionalität NCO von 1,9 bis 2,5; einer Funktionalität NCO von 1,9 bis 2,3; einer Funktionalität NCO von 1,9 bis 2,2; einer Funktionalität NCO von 1,9 bis 2,1; einer Funktionalität NCO von 2 bis 2,5; einer Funktionalität NCO von 2 bis 2,3; einer Funktionalität NCO von 2 bis 2,2.

**4.** Zusammensetzung gemäß den Ansprüchen 1 bis 3, umfassend mindestens ein Allophanat der Funktionalität NCO von 1,9 bis 2,1 oder der Funktionalität NCO von 1,95 bis 2,05.

**5.** Zusammensetzung gemäß den Ansprüchen 1 bis 4, wobei

• $R^1$ den Rest einer Monoalkohol-Verbindung ausgewählt aus den Verbindungen der Formel (II) darstellt

$$T\text{-}[O\text{-}CH(L)\text{-}CH_2]_n\text{-}OH \qquad (II)$$

wobei

o T eine lineare $C_1$-$C_{20}$ Alkylgruppe oder eine verzweigte $C_1$-$C_{20}$ Alkylgruppe, eine Gruppe der Formel Q-CO- darstellt, wobei Q eine lineare $C_1$-$C_{20}$ Alkylgruppe oder eine verzweigte C-$C_{20}$ Alkylgruppe darstellt;
◦ n eine ganze Zahl darstellt, vorteilhaft eine ganze Zahl von 1 bis 10, vorzugsweise von 1 bis 5;
o L H oder eine Alkylgruppe oder eine $C_1$-$C_8$ Alkylgruppe, insbesondere Methyl, oder eine Polyethergruppe, insbesondere eine Gruppe der Formel -$CH_2$OG darstellt, wobei G eine Kohlenwasserstoffkette, insbesondere eine Polyoxyalkylen-Kette, vorzugsweise eine Polyoxyethylen-Kette darstellt; oder

• $R^2$ und $R^3$, gleich oder verschieden, eine Gruppe umfassend eine Isocyanat-Funktion, derivatisiert oder nicht-derivatisiert und ausgewählt aus einer aliphatischen, cycloaliphatischen, heterocyclischen oder aromatischen Kohlenwasserstoffgruppe, vorzugsweise einer aliphatischen Kohlenwasserstoffgruppe, umfassend eine derivatisierte oder nicht-derivatisierte Isocyanat-Gruppe, darstellen; oder
• $R^1$ den Rest einer Monoalkohol-Verbindung ausgewählt aus den Verbindungen der Formel (II) darstellt

$$T[\text{-}O\text{-}CH(L)\text{-}CH_2]_n\text{-}OH \qquad (II)$$

wobei

◦ T eine lineare $C_1$-$C_{20}$ Alkylgruppe oder eine verzweigte $C_1$-$C_{20}$ Alkylgruppe, eine Gruppe der Formel Q-CO- darstellt, wobei Q eine lineare $C_1$-$C_{20}$ Alkylgruppe oder eine verzweigte $C_1$-$C_{20}$ Alkylgruppe darstellt;
o n eine ganze Zahl darstellt, vorteilhaft eine ganze Zahl von 1 bis 10, vorzugsweise von 1 bis 5;
o L H oder eine Alkylgruppe oder eine $C_1$-$C_8$ Alkylgruppe, insbesondere Methyl, oder eine Polyethergruppe, insbesondere eine Gruppe der Formel -$CH_2$OG, wobei G eine Kohlenwasserstoffkette, insbesondere eine Polyoxyalkylenkette, vorzugsweise Polyoxyethylenkette darstellt, darstellt; und
o $R^2$ und $R^3$, gleich oder verschieden, eine Gruppe umfassend eine Isocyanat-Funktion, derivatisiert oder nicht-derivatisiert und ausgewählt aus einer aliphatischen, cycloaliphatischen, heterocyclischen oder aromatischen Kohlenwasserstoffgruppe, vorzugsweise einer aliphatischen Kohlenwasserstoffgruppe umfassend eine derivatisierte oder nicht-derivatisierte Isocyanat-Funktion, darstellen.

**6.** Zusammensetzung gemäß den Ansprüchen 1 bis 5, wobei das Allophanat ein Homoallophanat ist, $R^2$ und $R^3$ gleich sind, oder wobei das Allophanat ein gemischtes Alophanat ist, $R^2$ und $R^3$ verschieden sind.

**7.** Zusammensetzung gemäß den Ansprüchen 1 bis 6

• umfassend eine Mischung aus Allophanaten umfassend mindestens 25 Gew.-%, vorteilhaft mindestens 33 Gew.-%, vorzugsweise mindestens 50 Gew.-% mindestens eines Monoallophanats; oder
• umfassend eine Mischung aus Allophanaten umfassend mindestens ein Allophanat ausgewählt aus einem bis-Allophanat, einem tris-Allophanat, einem oder mehreren schweren Allophanaten, so wie, als Minderheit, ein Carbamat des Isocyanats $R^2$NCO und des Alkohols $R^1$OH oder ein Carbamat des Isocyanats $R^3$NCO und

des Alkohols $R^1OH$ oder ein Carbamat der Isocyanate $R^2NCO$ und $R^3NCO$ und des Alkohols $R^1OH$.

**8.** Zusammensetzung gemäß den Ansprüchen 1 bis 7

• umfassend ein hydrophobes Harz der Funktionalität OH von 2 bis 25; der Funktionalität OH von 2 bis 15; der Funktionalität OH von 2 bis 10; der Funktionalität OH von 2 bis 5; der Funktionalität OH von 2,1 bis 25; der Funktionalität OH von 2,1 bis 15; der Funktionalität OH von 2,1 bis 10; der Funktionalität OH von 2,1 bis 5; oder

• umfassend ein hydrophobes Harz, dessen Molekulargewicht größer ist als 1000 g/mol oder umfassend ein hydrophobes Harz umfasst, dessen Löslichkeitsparameter einen Wert kleiner als 18,4 $MPa^{1/2}$ oder kleiner als 16,4 $MPa^{1/2}$ oder zwischen 16,4 und 18,4 $MPa^{1/2}$ haben.

**9.** Zusammensetzung gemäß den Ansprüchen 1 bis8, umfassend ebenso mindestens ein polyfunktionelles Isocyanat-Trikondensat (c) oder mindestens einen Zusatzstoff des Typs Polyol und verschieden von dem Harz (b) oder gleichzeitig mindestens ein polyfunktionelles Isocyanat-Trikondensat (c) und mindestens einen Zusatzstoff des Typs Polyol und verschieden von dem Harz (b).

**10.** Zusammensetzung gemäß den Ansprüchen 1 bis 9, umfassend ebenso mindestens ein polyfunktionelles Isocyanat-Trikondensat (c) ausgewählt aus den Verbindungen der Formel (III):

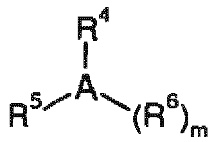

(III)

wobei

▪ $R^4$, $R^5$ und $R^6$ unabhängig eine Kohlenwasserstoff- oder eine aliphatische, cycloaliphatische, heterocyclische oder aromatische Kohlenwasserstoffgruppe, umfassend eine derivatisierte oder nicht-derivatisierte Isocyanat-Funktion, darstellen;

▪ m 0, 1 oder 2 darstellt;

▪ A eine Gruppe ausgewählt aus einer Isocyanurat-Gruppe, einer Iminooxadiazindion-Gruppe, einer Oxadiazintrion-Gruppe, einer Biuret-Gruppe jeweils der Formeln (A1) bis (A4)

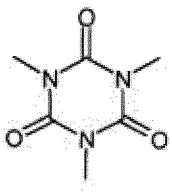

(A1)

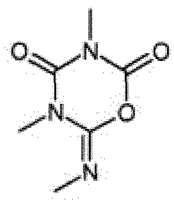

(A2)

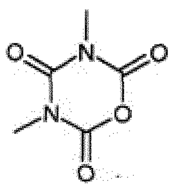

(A3)

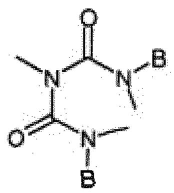

(A4)

darstellt,

wobei B unabhängig ein Wasserstoffatom; eine Kohlenwasserstoffgruppe; eine $C_1$-$C_{20}$ Kohlenwasserstoffgruppe; eine Heterokohlenstoffgruppe umfassend mindestens ein Heteroatom ausgewählt aus O, N, S, Si; einer $C_1$-$C_{20}$ Heterokohlenstoffgruppe umfassend mindestens ein Heteroatom ausgewählt aus O, N, S, Si; einer Gruppe der Formel (B1)

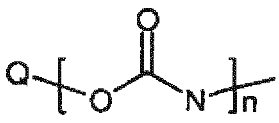

(B1)

darstellt,
wobei n 3 oder 4 darstellt und Q eine Gruppe ausgewählt aus einer Kohlenwasserstoffgruppe, einer Alkylgruppe, einer Kohlenwasserstoffgruppe, einer aliphatischen, cycloaliphatischen, heterocyclischen oder aromatischen Kohlenwasserstoffgruppe darstellt, umfassend eine derivatisierte oder nicht-derivatisierte Isocyanat-Funktion.

**11.** Zusammensetzung gemäß den Ansprüchen 1 bis 10, umfassend ebenso mindestens ein polyfunktionelles Isocyanat-Trikondensat (c), das ein echtes Polyisocyanat Isocyanurat ist oder umfassend ebenso mindestens ein polyfunktionelles Isocyanat-Trikondensat (c) gemäß den Charakteristika:

(i) das Gewichtsverhältnis zwischen dem Allophanat der Isocanat-Komponente (a) und dem polyfunktionellen Isocyanat-Trikondensat (c) beträgt von 60/40 bis 90/10, von 30/70 bis 90/10, von 60/40 bis 80/20, von 30/70 bis 80/20, von 60/40 bis 85/15, von 30/70 bis 85/15;
(ii) das polyfunktionelle Isocyanat-Trikondensat (c) stammt aus einer Trikondensationsreaktion, wobei die Transformationsrate des oder der Isocyanat-Monomere, gleich oder verschieden, zu polyfunktionellem Polyisocyanat-Trikondensat größer als 8% oder größer als 10% oder größer als 15% ist;
(iii) das polyfunktionelle Isocyanat-Trikondensat (c) zwischen 1 und 99 Gew.-% Biuret oder zwischen 2 und 75 Gew.-% Biuret umfasst;

die Kombinationen (i) und (ii), (i) und (iii), (ii) und (iii) oder (i), (ii) und (iii).

**12.** Verwendung einer Isocyanat-Komponente (a) oder eines Allophanats definiert gemäß den Ansprüchen 1 oder 3 bis 7 als Härter eines hydrophoben Harzes definiert gemäß den Ansprüchen 1 oder 8.

**13.** Verwendung einer Zusammensetzung gemäß den Ansprüchen 1 bis 12 zur Herstellung eines (Poly)urethans, zur Herstellung eines (Poly)urethan-Werkstoffs zur Verkapselung oder zur Herstellung eines (Poly)urethan-Werkstoffs zur Verkapselung einer elektrischen Vorrichtung.

**14.** Elektrische Vorrichtung, verkapselt durch mindestens ein (Poly)urethan hergestellt mittels einer Zusammensetzung gemäß den Ansprüchen 1 bis 13.

**15.** Verwendung einer Isocyanat-Komponente (a) oder eines Allophanats definiert gemäß den Ansprüchen 1 oder 3 bis 7 als Ersatz für poly-Methylendiphenyldiisocyanat (pMDI) in der Herstellung eines (Ply)urethans mittels eines hydrophoben Harzes gemäß den Ansprüchen 1 bis 8 oder zur Herstellung eines (Poly)urethans als Verkapselungsmaterial oder elektrisches Verkapselungsmaterial.

## Claims

**1.** A composition for preparing a (poly)urethane, the average functionality of which is greater than 2, comprising

(a) an isocyanate component with an NCO functionality comprised between 1.9 and 2.7 and comprising at least one allophanate

- with an NCO functionality equal to 2 +/- 5% and
- of formula (I)

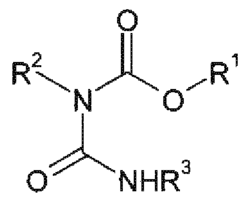

(I)

wherein

o $R^1$ represents the residue of a mono-alcohol compound comprising an ether or polyether function after reaction of the hydrogen of the OH function with a compound with an isocyanate function;
o $R^2$ and $R^3$, either identical or different, represent a hydrocarbon group, comprising a derived or non-derived isocyanate function;

(b) at least one hydrophobic resin with hydroxyl functions

• with a molar mass of more than 500 g/mol;
• with an OH functionality equal to 2 or greater than 2;
• solubility parameters with a value of less than 20.4 $MPa^{1/2}$ and
• different from a polyamine selected from acrylonitrile/butadiene copolymers with amine end functions, selected from

o a linear or branched poly-propylene with hydroxyl groups;
o a linear or branched poly- propylene with hydroxyl end groups;
o a linear or branched hydroxylated poly-butadiene with hydroxyl groups;
o a linear or branched hydroxylated poly-butadiene with hydroxyl end groups;
o a linear or branched hydroxylated poly-butadiene.

**2.** The composition according to claim 1 for which the molar ratio defined by (number of NCO functions/number of OH functions) ranges from 0.9 to 3; from 1 to 3; from 0.9 to 1.5; from 1 to 1.5; from 0.9 to 1.2 or from 1 to 1.2.

**3.** The composition according to claims 1 or 2 comprising an isocyanate component (a) with NCO functionality selected from an NCO functionality ranging from 1.9 to 2.5; an NCO functionality ranging from 1.9 to 2.3; an NCO functionality ranging from 1,9 to 2.2, an NCO functionality ranging from 1.9 to 2.1; an NCO functionality ranging from 2 to 2.5; an NCO functionality ranging from 2 to 2.3; an NCO functionality ranging from 2 to 2.2.

**4.** The composition according to claims 1 to 3, comprising at least one allophanate with NCO functionality ranging from 1.9 to 2.1 or an NCO functionality ranging from 1.95 to 2.05.

**5.** The composition according to claims 1 to 4 for which

• $R^1$ represents the residue of a mono-alcohol compound selected from the components of formula (II)

$$T\text{-}[O\text{-}CH(L)\text{-}CH2]_n\text{-}OH \qquad (II)$$

wherein

o T represents a linear $C_1$-$C_{20}$ group or a branched $C_1$-$C_{20}$-alkyl group, a group of formula Q-CO- wherein Q represents a linear $C_1$-$C_{20}$-alkyl group or a branched $C_1$-$C_{20}$-(alkyl group;
o n represents an integer, advantageously an integer ranging from 1 to 10, preferably ranging from 1 to 5;
o L represents H or an alkyl group or a $C_1$-$C_8$-alkyl group, notably a methyl group, or a polyether group, notably a group of formula $-CH_2OG$ wherein G represents a hydrocarbon chain, notably a polyoxyalkylene chain, preferably a polyoxyethylene chain; or

• $R^2$ and $R^3$, either identical or different, represent a group comprising a derived or non-derived isocyanate

function and selected from an aliphatic, cycloaliphatic, heterocyclic or aromatic hydrocarbon group, preferably an aliphatic hydrocarbon group comprising a derived or non-derived isocyanate function; or

• $R^1$ represents the residue of a mono-alcohol compound selected from the compounds of formula (II)

$$T\text{-}[O\text{-}CH(L)\text{-}CH_2]_n\text{-}OH \qquad (II)$$

wherein

o T represents a linear $C_1$-$C_{20}$-alkyl group or a branched $C_1$-$C_{20}$-alkyl group, a group of formula Q-CO- wherein Q represents a linear $C_1$-$C_{20}$-alkyl group or a branched $C_1$-$C_{20}$-alkyl group;

o n represents an integer, advantageously an integer ranging from 1 to 10, preferably ranging from 1 to 5;

o L represents H or an alkyl group or a $C_1$-$C_8$-alkyl group, notably a methyl group, or a polyether group, notably a group of formula $-CH_2OG$ wherein G represents a hydrocarbon chain, notably a polyoxyalkylene chain, preferably a polyoxyethylene chain; and

• $R^2$ and $R^3$, either identical or different, represent a group comprising a derived or non-derived isocyanate function and selected from an aliphatic, cycloaliphatic, heterocyclic or aromatic hydrocarbon group, preferably an aliphatic hydrocarbon group comprising a derived or non-derived isocyanate function.

**6.** The composition according to claims 1 to 5, for which the allophanate is a homo-allophanate, $R^2$ and $R^3$ being identical, or for which the allophanate is a mixed allophanate, $R^2$ and $R^3$ being different.

**7.** The composition according to claims 1 to 6:

- comprising a mixture of allophanates comprising at least 25% by mass, advantageously at least 33% by mass, preferably at least 50% by mass of at least one mono-allophanate; or
- comprising a mixture of allophanates comprising at least one allophanate selected from a bis-allophanate, a tris-allophanate, one or several heavy allophanates, as well as a minority, isocyanate carbamate $R^2NCO$ and alcohol carbamate $R^1OH$ or isocyanate carbamate $R^3NCO$ and alcohol carbamate $R^1OH$ or carbamate of isocyanate $R^2NCO$ and $R^3NCO$ and of an alcohol $R^1OH$.

**8.** The composition according to claims 1 to 7:

- comprising a hydrophobic resin with an OH functionality ranging from 2 to 25; with an OH functionality ranging from 2 to 15; with an OH functionality ranging from 2 to 10; with an OH functionality ranging from 2 to 5; with an OH functionality ranging from 2.1 to 25; with an OH functionality ranging from 2.1 and 15; with an OH functionality ranging from 2.1 to 10; with an OH functionality ranging from 2.1 to 5; or
- comprising a hydrophobic resin for which the molecular mass is greater than 1,000 g/mol; or
- comprising a hydrophobic resin for which the solubility parameters have a value of less than 18.4 $MPa^{1/2}$ or less than 16.4 $MPa^{1/2}$ or comprised between 16.4 and 18.4 $MPa^{1/2}$.

**9.** The composition according to claims 1 to 8, also comprising at least one polyfunctional isocyanate tricondensate (c) or at least one additive of the polyol type and different from the resin (b) or simultaneously at least one polyfunctional isocyanate tricondensate (c) and at least one additive of the polyol type and different from the resin (b).

**10.** The composition according to claims 1 to 9, also comprising at least one polyfunctional isocyanate tricondensate (c) selected from the compounds of formula (III):

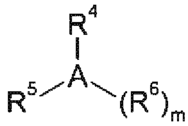

(III)

wherein

- $R^4$, $R^5$ and $R^6$ represent independently an aliphatic, cycloaliphatic, heterocyclic or aromatic heterocarbon or hydrocarbon group, comprising a derived or non-derived isocyanate function;
- m represents 0, 1 or 2;
- A represents a group selected from an isocyanurate group, an imino oxadiazine dione group, an oxadiazine trione group, a biuret group of formulae (A1) to (A4) respectively,

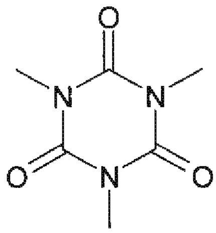
(A1)

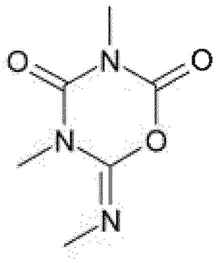
(A2)

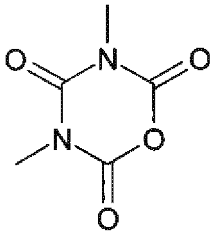
(A3)

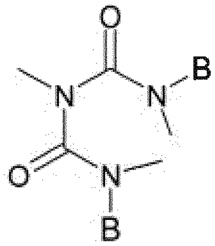
(A4)

wherein B represents independently a hydrogen atom; a hydrocarbon group; a $C_1$-$C_{20}$ hydrocarbon group; a heterocarbon group comprising at least one heteroatom selected from O, N, S, Si; a $C_1$-$C_{20}$ heterocarbon group comprising at least one heteroatom selected from O, N, S, Si; a group of formula (B1)

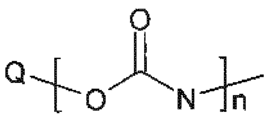
(B1)

wherein n represents 3 or 4 and Q represents a group selected from a hydrocarbon group, an alkoyl group, a hydrocarbon group, an aliphatic, cycloaliphatic, heterocyclic or aromatic heterocarbon group, comprising a derived or non-derived isocyanate function.

**11.** The composition according to claims 1 to 10 also comprising at least one polyfunctional isocyanate tricondensate (c) which is a real polyisocyanate isocyanurate; or also comprising at least one polyfunctional isocyanate tricondensate (c) according to the characteristics:

(i) the weight ratio between the allophanate of the isocyanate component (a) and the polyfunctional isocyanate tricondensate (c) ranges from 60/40 to 90/10, from 30/70 to 90/10, from 60/40 to 80/20, from 30/70 to 80/20, from 60/40 to 85/15, from 30/70 to 85/15;
(ii) the polyfunctional isocyanate tricondensate (c) stems from a tricondensation reaction for which the transformation rate of the isocyanate monomer(s), either identical or different, into polyfunctional polyisocyanate tricondensate is greater than 8% or greater than 10% or greater than 15%:
(iii) the polyfunctional isocyanate tricondensate (c) comprises between 1 and 99% by weight of biuret or between 2 and 75% by weight of biuret;

the combinations (i) and (ii), (i) and (iii), (ii) and (iii) or (i), (ii) and (iii).

**12.** The use of an isocyanate component (a) or of an allophanate defined according to claims 1 or 3 to 7 as a hardener of a hydrophobic resin defined according to claims 1 or 8

**13.** The use of a composition according to claims 1 to 12 for preparing a (poly)urethane, for preparing a (poly)urethane material for encapsulation or for preparing a (poly)urethane material for encapsulating an electric device.

**14.** An electric device encapsulated by means of a (poly)urethane prepared from a composition according to claims 1 to 13.

**15.** The use of an isocyanate compound (a) or of an allophanate defined according to claims 1 or 3 to 7 by replacement of the poly(methylene diphenyl diisocyanate) (pMDI) in the preparation of a (poly)urethane from a hydrophobic resin according to claims 1 or 8, or for preparing a (poly)urethane as an encapsulation material or as an electric encapsulation material.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2010067005 A
- EP 031207 A
- US 20110263797 A
- US 5124427 A
- EP 2289963 A
- US 5688860 A